# EUROPÄISCHE PATENTSCHRIFT

(11) **EP 1 699 649 B1**
(45) Veröffentlichungstag und Bekanntmachung des Hinweises auf die Patenterteilung: **07.04.2010**
(21) Anmeldenummer: 04798051.1
(22) Anmeldetag: 23.11.2004
(51) Int. Cl.: B60H 1/00, B60H 1/34

(54) **VORRICHTUNG ZUR LUFTMENGENREGELUNG, INSBESONDERE FÜR EINE KRAFTFAHRZEUG-KLIMAANLAGE**
AIR FLOW REGULATION DEVICE, ESPECIALLY FOR THE AIR CONDITIONING SYSTEM OF A MOTOR VEHICLE
DISPOSITIF POUR REGULER LA QUANTITE D'AIR, EN PARTICULIER DANS LE DISPOSITIF DE CLIMATISATION D'UN VEHICULE

(30) Priorität: 22.12.2003 DE 10361108
(43) Veröffentlichungstag der Anmeldung: 13.09.2006
(73) Patentinhaber: Behr GmbH & Co. KG, 70469 Stuttgart (DE)
(72) Erfinder: KOMOWSKI, Michael, 71265 Weil der Stadt-Merklingen (DE)
(86) Internationale Anmeldenummer: PCT/EP2004/013268
(87) Internationale Veröffentlichungsnummer: WO 2005/063516

(56) Entgegenhaltungen:
- EP-A- 1 469 258
- DE-A- 10 018 268
- DE-A- 10 151 910
- DE-U- 29 814 953

## Beschreibung

Die Erfindung betrifft eine Vorrichtung mit einem Gehäuse und einer Klappenanordnung zur Luftmengenregelung, insbesondere für eine Kraftfahrzeug-Klimaanlage, gemäß dem Oberbegriff des Anspruchs 1 und ein Klimagerät mit einer Vorrichtung zur Luftmengenregelung gemäß Anspruch 9. Eine derartige Vorrichtung ist aus GB 0 308 580, das als nächstliegender Stand der Technik angesehen wird, offenbart.

Bei einer herkömmlichen Absperrvorrichtung mit einer Luftmengenregelung der Stauluft sind zwei oder mehr parallel zueinander angeordnete Klappen mit mindestens einem Zwischensteg als Klappenanschlag vorgesehen. Dabei führen die Zwischenstege sowohl zu Querschnittsverengungen als auch zu Geräuschen im Ansaugbereich. Aus werkzeugtechnischen Gründen sind, da lange, schmale Kunststoffstege kaum realisierbar sind, die Zwischenstege überdimensioniert.

Es ist Aufgabe der Erfindung, eine verbesserte Vorrichtung zur Luftmengenregelung zur Verfügung zu stellen.

Diese Aufgabe wird gelöst durch eine Vorrichtung mit einer Klappenanordnung mit den Merkmalen des Anspruchs 1. Vorteilhafte Ausgestaltungen sind Gegenstand der Unteransprüche.

Erfindungsgemäß ist eine Vorrichtung mit einer Klappenanordnung vorgesehen, die mindestens zwei um parallel zueinander verlaufende Schwenkachsen verschwenkbare Klappenteile aufweist, wobei die beiden Klappenteile im geschlossenen Zustand der Klappenanordnung aneinander anliegen und bei einer Bewegung zumindest eines Klappenteils vom geschlossenen Zustand in einen Zustand der teilweisen Öffnung oder umgekehrt, aneinander abrollen und/oder aneinander gleiten. Dies ermöglicht ein dichtes Schließen, wofür zudem bevorzugt mindestens eines der beiden Klappenteile zumindest im Anlagebereich außen elastisch ausgebildet ist, so dass ein dichtes Schließen ohne Zwischensteg als Klappenanschlag möglich ist. Die beiden einander zugeordneten Klappenteile liegen bevorzugt im geschlossen Zustand flächig aneinander an. Zur Bildung des elastischen Anlagebereichs ist bevorzugt eine Beschichtung aus PP-Gummi oder eine Schaumumspritzung vorgesehen. Die elastische Ausgestaltung ermöglicht auch größere Toleranzen, ohne dass die Dichtheit beeinträchtigt wird.

Die beiden Klappenteile weisen vorzugsweise ein stromlinienförmiges Profil auf, so dass der Strömungswiderstand und damit auch der Druckabfall minimiert werden können.

Zur Abdichtung ist vorzugsweise im mittleren Bereich, zwischen den Schwenkachsen, auf zumindest einer Seite der Klappenanordnung ein Anschlag am Gehäuse vorgesehen, welcher im geschlossenen Zustand für eine Abdichtung zwischen den Klappenteilen und dem Gehäuse sorgt. Ferner ist, auf der gegenüberliegenden Seite je Klappenteil ein Seitenanschlag vorgesehen.

Im Folgenden wird die Erfindung anhand eines Ausführungsbeispiels unter Bezugnahme auf die Zeichnung im Einzelnen erläutert. Es zeigen:
- Fig. 1: einen Schnitt durch ein Luftführungsgehäuse einer Kraftfahrzeug-Klimaanlage mit einer herkömmlichen Klappe und einer erfindungsgemäßen Klappenanordnung in geschlossener Stellung,
- Fig. 2: das Luftführungsgehäuse von Fig. 1, wobei verschiedene Zwischenstellungen eines der Klappenteile dargestellt sind,
- Fig. 3: das Luftführungsgehäuse von Fig. 1, wobei verschiedene Zwischenstellungen beider Klappenteile dargestellt sind,
- Fig. 4: das Luftführungsgehäuse von Fig. 1 mit der Klappenanordnung in geöffneter Stellung,
- Fig. 5: eine perspektivische Ansicht des Luftführungsgehäuses mit geschlossener Klappenanordnung,
- Fig. 6: eine Fig. 5 entsprechende Ansicht mit einem geöffneten und einem geschlossen Klappenteil,
- Fig. 7: eine Fig. 5 entsprechende Ansicht mit geöffneter Klappenanordnung, und
- Fig. 8: eine Seitenansicht der Klappenanordnung in geschlossener Stellung.

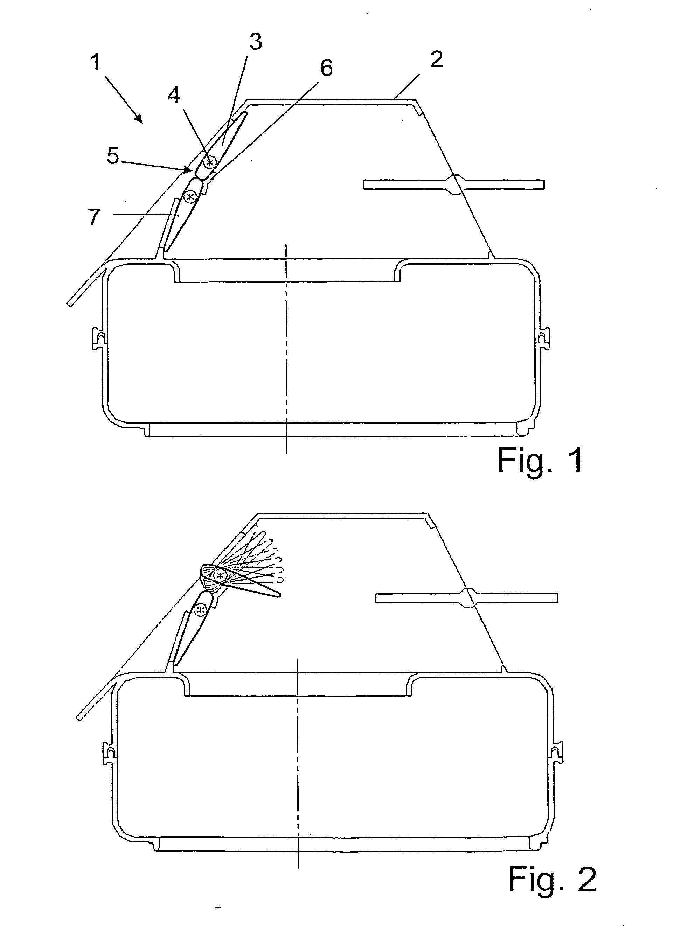

In Fig.1 ist eine Vorrichtung zur Luftmengenregelung mit einem Gehäuse 2 und einer Klappenanordnung 1 einer Kraftfahrzeug-Klimaanlage dargestellt. Eine Öffnung in der Gehäusewandung, die als Eintrittsöffnung für Frischluft dient, kann von einer Klappenanordnung 1 verschlossen und geöffnet werden. Gegenüberliegend dieser Eintrittsöffnung befindet sich eine weitere Öffnung im Gehäuse, die der Zufuhr von Umluft dient. Im Bereich dieser Umlufteintrittsöffnung befindet sich als Verschlusselement eine herkömmliche zweiflügelige Klappe, die in Fig. 1 in Öffnungsstellung gezeigt ist.

Zwischen den Eintrittsöffnungen für Frisch- und Umluft liegt eine Öffnung die zu einem Bereich des Gehäuses 2 führt, in dem sich ein luftansaugendes Gebläse 8 befindet.
Die Klappenanordnung 1 besteht aus zwei Klappenteilen 3, die im Wesentlichen unabhängig voneinander um parallel zueinander verlaufende Schwenkachsen 4 verschwenkbar sind. Ein Klappenteil 3, vorzugsweise stromlinienförmig ausgeführt, hat jeweils ein spitz zulaufendes Ende und einen diesem spitzen Ende gegenüberliegenden Endbereich 5 mit einer im wesentlichen kreisförmigen Rundung, deren Durchmesser im Wesentlichen der maximalen Klappenteildicke entspricht. Die Schwenkachse 4 eines Klappenteiles 3 liegt außermittig der Klappe, wobei sie vom spitz zulaufenden Ende einen größeren Abstand als vom Endbereich 3 aufweist.
In der die Frischluftöffnung verschließenden Position sind die Klappenteile 3 so angeordnet, dass die Endbereiche 5 dichtend aneinanderliegen und die spitz zulaufenden Enden voneinander abgewandt an einem Seitenanschlag 7 des Gehäuses 2 anliegen. Die Seitenanschläge 7 befinden sich im Bereich der Stirnseiten der Klappenteile 3 und sind in Form schmaler Stege am Gehäuse 2 ausgeführt.

Fig. 2 zeigt den Verlauf einer Schwenkbewegung eines Klappenteils 3 von der die Frischlufteintrittsöffnung vollständig verschließenden Position, über Zwischenstellungen hin zu einer Öffnungsposition. In dieser Position der vollständigen Öffnung wird der Klappenteil 3 durch einen Anschlag 6 festgelegt. Dieser ist symmetrisch zwischen den Schwenkachsen der Klappenteile angeordnet, wobei sich seine Kontur im geschlossenen Zustand, der aus den beiden Endbereichen 5 der Klappenteile 3 gebildeten Kontur, dichtend anpasst. Um die Verschwenkbewegung der Klappenteile nicht zu behindern, weist der Anschlag 6 eine Gesamtlänge auf, die in etwa dem Abstand der Schwenkachsen 4, vermindert um die Dicke eines Klappenteils 3 entspricht. Der mittlere Anschlag 6 ist zumindest auf einer Stirnseite der Klappenanordnung 1 als vorspringender Steg am Gehäuse 2 ausgeführt.

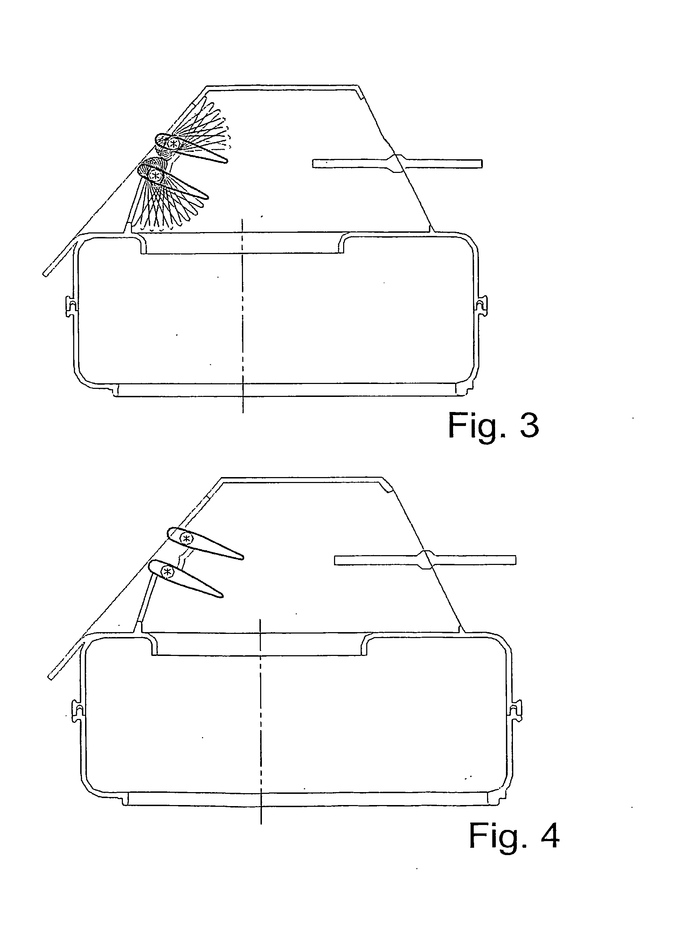

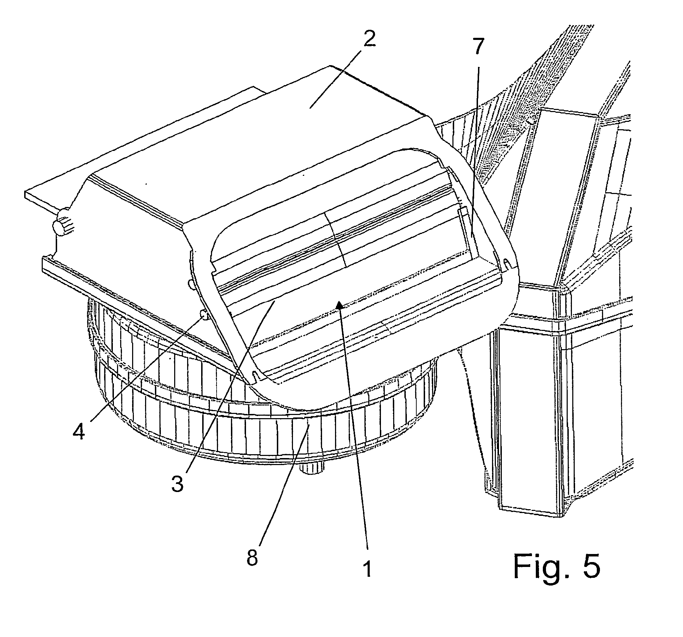

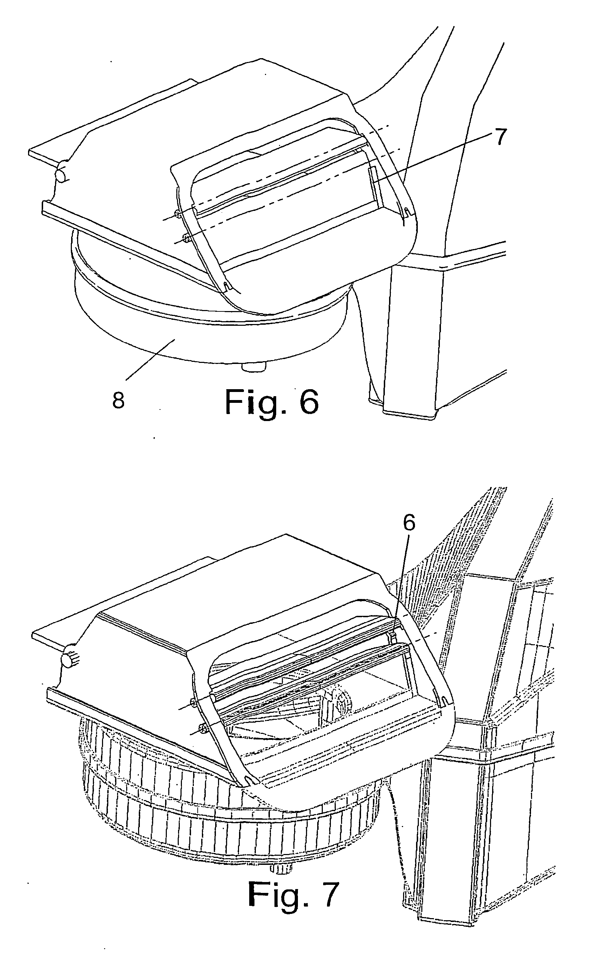

Ein Verlauf der Schwenkbewegung beider Klappenteile 3 ist in Fig. 3 gezeigt. Die Drehbewegung der Klappenteile kann synchronisiert oder unabhängig voneinander erfolgen. In der geöffneten Endstellung der Klappenteile 3, wie sie in Fig. 4 dargestellt ist, liegen diese an gegenüberliegenden Enden des mittleren Anschlags 6 an. Die Klappenteile 3 sind strömungsoptimiert ausgebildet, so dass sie in dieser geöffneten Stellung einen möglichst geringen Luftwiderstand bieten.
In perspektivischen Ansichten der Vorrichtung zur Luftmengenregelung mit Draufsicht auf die Frischlufteintrittsöffnung zeigen die Fig. 5 die Klappenanordnung 1 in geschlossener Stellung, wobei die stirnseitigen Bereiche der Klappenteile 3 an Seitenanschlägen 7 anliegen, die Fig. 6 die Klappenanordnung 1 in halbgeschlossener Stellung, wobei ein Klappenteil 3 geöffnet ist und ein zweiter Klappenteil 3 in geschlossener Position vorliegt und Fig. 7 die Klappenanordnung 1 in geöffneter Stellung, wobei beide Klappenteile 3 am mittleren Anschlag 6 des Gehäuses anliegen.

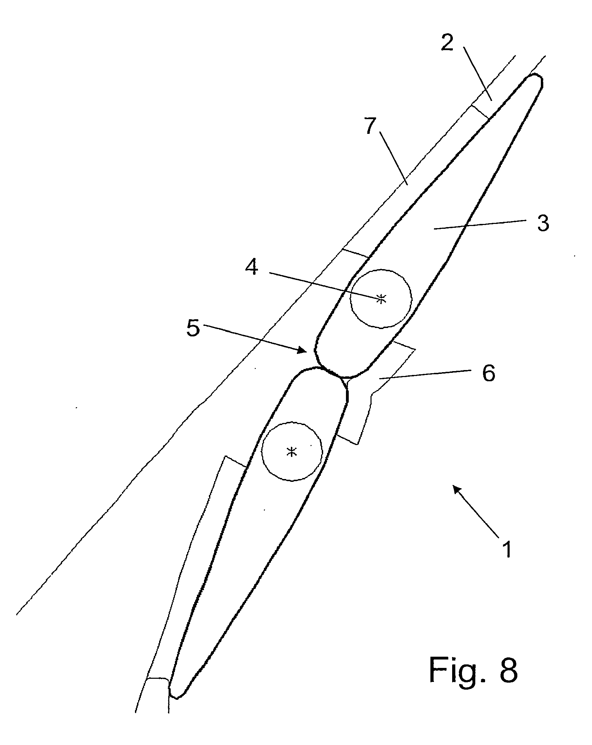

Fig. 8 zeigt die Klappenanordnung 1 in detaillierter Darstellung um insbesondere die Dichtfunktion zu verdeutlichen. Der schwenkachsen seitige Endbereich 5 eines Klappenteils 3 ist über einen wesentlichen Teil im Wesentlichen kreisförmig ausgebildet. Dabei sind die Endbereiche 5 zumindest in ihrem äußeren Bereich elastisch ausgebildet. Hierfür ist eine Schaumumspritzung der Klappenteile 3 in den Endbereichen 5 vorgesehen.
Die beiden Schwenkachsen 4 sind voneinander weniger beabstandet als die Summe der Abstände der äußersten Teile der Endbereiche 5 vo n den zugehörigen Schwenkachsen 4 der beiden Klappenteile 3, so dass die Endbereiche 5 zumindest teilweise während der Schließ- oder Öffnungsbewegung aneinander abrollen und/oder aneinander gleiten, wobei sie leicht elastisch verformt werden und ein dichtes Schließen gewährleisten. Zur seitlichen Abdichtung sind mindestens ein mittlerer Anschlag 6 und zwei Seitenanschläge 7 vorgesehen, welche in Folge der symmetrischen Anordnung der Klappenteile 3 eine gute Abdichtung ermöglichen.

### Bezugszeichenliste

1 Klappenanordnung
2 Gehäuse
3 Klappenteil
4 Schwenkachse
5 Endbereich
6 Anschlag
7 Seitenanschlag
8 Gebläse

## Patentansprüche

1. Vorrichtung zur Luftmengenregelung mit einem Gehäuse (2) und einer Klappenanordnung (1) mit mindestens zwei, um parallel zueinander verlaufende Schwenkachsen (4) verschwenkbaren Klappenteilen (3) zum Öffnen und Schließen einer Öffnung, wobei die beiden Klappenteile (3) im geschlossenen Zustand der Klappenanordnung (1), mit Endbereichen (5) aneinander anliegen, **dadurch gekennzeichnet, dass** die beiden Klappenteile (3) bei einer Bewegung zumindest eines Klappenteils vom geschlossenen Zustand in einen Zustand der teilweisen Öffnung oder umgekehrt, aneinander abrollen und/oder aneinander gleiten.

2. Vorrichtung nach Anspruch 1, **dadurch gekennzeichnet, dass** mindestens eines der beiden Klappenteile (3) zumindest im Anlagebereich außen elastisch ausgebildet ist.

3. Vorrichtung nach Anspruch 1 oder 2, **dadurch gekennzeichnet, dass** die beiden Klappenteile (3) im geschlossen Zustand in einer flächigen Berührung sind.

4. Vorrichtung nach einem der vorhergehenden Ansprüche, **dadurch gekennzeichnet, dass** die beiden Klappenteile (3) ein stromlinienförmiges Profil aufweisen.

5. Vorrichtung nach einem der vorhergehenden Ansprüche, **dadurch gekennzeichnet, dass** im mittleren Bereich zwischen den Schwenkachsen auf zumindest einer Seite der Klappenanordnung (1) ein Anschlag (6) am Gehäuse (2) vorgesehen ist.

6. Vorrichtung nach einem der vorhergehenden Ansprüche, **dadurch gekennzeichnet, dass** je ein Seitenanschlag (7) auf einer Seite der Klappenanordnung (1) am Gehäuse (2) vorgesehen ist.

7. Vorrichtung nach Anspruch 5 und 6, **dadurch gekennzeichnet, dass** der mittlere Anschlag (6) und die beiden Seitenanschläge (7) auf einander gegenüberliegenden Seiten der Klappenteile (3) angeordnet sind.

8. Vorrichtung nach einem der vorhergehenden Ansprüche, **dadurch gekennzeichnet, dass** die Klappenteile (3) eine Beschichtung aus PP-Gummi oder eine Schaumumspritzung aufweisen.

9. Klimagerät, insbesondere für Kraftfahrzeuge, **dadurch gekennzeichnet, dass** das Klimagerät eine Vorrichtung nach einem der Ansprüche 1 bis 8 enthält.

10. Klimagerät, nach Anspruch 9, **dadurch gekennzeichnet, dass** das Klimagerät zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

## Claims

1. Air volume control device having a housing (2) and a flap arrangement (1) with at least two flap parts (3) for opening and closing an opening which are pivotable about pivot axes (4) which run parallel to one another, wherein end regions (5) of the two flap parts (3) bear against one another in the closed state of the flap arrangement (1), **characterised in that** the two flap parts (3) roll and/or slide on one another during a movement of at least one flap part from the closed state into a partially open state and vice versa.

2. Device according to claim 1, **characterised in that** at least one of the two flap parts (3) is designed to be externally elastic at least in the bearing region.

3. Device according to claim 1 or 2, **characterised in that** the two flap parts (3) are in planar contact in the closed state.

4. Device according to any of the preceding claims, **characterised in that** the two flap parts (3) have a streamlined profile.

5. Device according to any of the preceding claims, **characterised in that** a stop (6) is provided on the housing (2) in the central region between the pivot axes on at least one side of the flap arrangement (1).

6. Device according to any of the preceding claims, **characterised in that** a side stop (7) is provided on the housing (2) on each side of the flap arrangement (1).

7. Device according to claims 5 and 6, **characterised in that** the central stop (6) and the two side stops (7) are arranged on mutually opposing sides of the flap parts (3).

8. Device according to any of the preceding claims, **characterised in that** the flap parts (3) have a coating of PP rubber or an injection-moulded foam encapsulation.

9. Air conditioner, in particular for motor vehicles, **characterised in that** the air conditioner includes a device according to any of claims 1 to 8.

10. Air conditioner according to claim 9, **characterised in that** the air conditioner comprises at least one of the following components: heat exchanger, heater, evaporator, filter, temperature mixing flap, mixing chamber, one or more flow ducts and one or more control dampers for distributing the air to the outlet ducts.

## Revendications

1. Dispositif servant à la régulation de la quantité d'air, comprenant un carter (2) et un agencement de volets (1) comportant au moins deux parties de volet (3) prouvant pivoter autour d'axes de pivotement (4) s'étendant parallèlement l'un par rapport à l'autre et servant à ouvrir et à fermer une ouverture, où les deux parties de volet (3), en position fermée de l'agencement de volets (1), viennent en appui l'une contre l'autre par leurs zones d'extrémité (5),
**caractérisé en ce que** les deux parties de volet (3), au cours d'un mouvement d'au moins une partie de volet passant de la position fermée à une position d'ouverture partielle, ou inversement, roulent l'une contre l'autre et / ou glissent l'une contre l'autre.

2. Dispositif selon la revendication 1, **caractérisé en ce qu'**au moins l'une des deux parties de volet (3) est configurée extérieurement de façon élastique, au moins dans la zone d'appui.

3. Dispositif selon la revendication 1 ou 2, **caractérisé en ce que** les deux parties de volet (3), en position fermée, sont configurées en formant un contact de surface.

4. Dispositif selon l'une quelconque des revendications précédentes, **caractérisé en ce que** les deux parties de volet (3) présentent un profil de forme aérodynamique.

5. Dispositif selon l'une quelconque des revendications précédentes, **caractérisé en ce qu'**il est prévu, sur le carter (2), une butée (6) placée sur au moins un côté de l'agencement de volets (1) et située dans la zone centrale comprise enture les axes de pivotement.

6. Dispositif selon l'une quelconque des revendications précédentes, **caractérisé en ce qu'**il est prévu, sur le carter (2), à chaque fois une butée latérale (7) placée sur un côté de l'agencement de volets (1).

7. Dispositif selon les revendications 5 et 6, **caractérisé en ce que** la butée centrale (6) et les deux butées latérales (7) sont disposées sur des côtés des parties de volet (3), placés à l'opposé l'un de l'autre.

8. Dispositif selon l'une quelconque des revendications précédentes, **caractérisé en ce que** les parties de volet (3) présentent un revêtement en caoutchouc de polypropylène (PP) ou un enrobage en mousse.

9. Système de climatisation, en particulier pour des véhicules automobiles, **caractérisé en ce que** le système de climatisation comprend un dispositif selon l'une quelconque des revendications 1 à 8.

10. Système de climatisation selon la revendication 9,
**caractérisé en ce que** le système de climatisation comprend au moins l'un des composants suivants : un échangeur de chaleur, un radiateur, un évaporateur, un filtre, un volet mélangeur de température, une chambre de mélange, un ou plusieurs conduits d'écoulement et un ou plusieurs volets de commande pour la répartition de l'air aux conduits de sortie.
